# EUROPÄISCHE PATENTSCHRIFT

(11) **EP 0 709 669 B1**
(45) Veröffentlichungstag und Bekanntmachung des Hinweises auf die Patenterteilung: **02.12.1998**
(21) Anmeldenummer: 95116544.8
(22) Anmeldetag: 20.10.1995
(51) Int. Cl.: G01N 27/403, G01N 27/36

(54) **Multifunktions-Sensor**
Multi-function sensor
Capteur multi-fonctions

(30) Priorität: 31.10.1994 DE 4438523
(43) Veröffentlichungstag der Anmeldung: 01.05.1996
(73) Patentinhaber: SCHOTT-GERÄTE GMBH, D-65719 Hofheim (DE)
(72) Erfinder: Diehm, Horst, D-55122 Mainz (DE); Dornauf, Andrea, D-65779 Kelkheim (DE); Gehringer, Werner, D-64285 Darmstadt (DE); Göckel, Ralf, Dr., D-64367 Mühltal (DE); Nennstiel, Fred, D-65614 Beselich (DE); Eining, Robert, Dr., D-64372 Ober-Ramstadt (DE); Tauber, Günter, Dr., D-65830 Kriftel (DE); Wendel, Harald, D-65439 Flörsheim (DE)
(74) Vertreter: Fuchs Mehler Weiss & Fritzsche

(56) Entgegenhaltungen:
- DE-U- 8 709 786
- DE-U- 8 814 742
- GB-A- 2 097 539
- US-A- 4 816 131

## Beschreibung

Die Erfindung betrifft einen Multifunktions-Sensor, der eine Bezugselektrode, eine erste pH-Meßelektrode und mindestens einen weiteren Sensor, die sich alle in einem Schaft befinden, aufweist.

Ein eingangs erwähnter Multifunktions-Sensor als sogenannte pH-Einstabmeßkette ist bekannt aus DE P 33 38 497 A1. Die beschriebene pH-Einstabmeßkette besteht aus einer pH-Glaselektrode mit Innenpuffer und Ableitsystem, einem Ableitsystem der Bezugselektrode, Bezugselektrolyt und Diaphragma, sowie zusätzlich einem Temperaturfühler, die sämtlich in einem Schaft kombiniert sind.

Die Sensorik spielt eine immer bedeutendere Rolle für die Umwelttechnik, Analytik, Qualitätssicherung, Rationalisierung und Automatisierung von Prozessen sowie für die Sicherheit in weiten Bereichen des täglichen Lebens. Dabei sollten soviele Parameter wie möglich erfaßt werden, um möglichst umfangreiche und besser verständliche Informationen über den jeweilig überwachten Prozeß zu erhalten. Je vollständiger die Kenntnisse des Prozesses, desto größer ist die Chance, ihn zu beherrschen. In der Praxis der industriellen Meßtechnik ist allerdings selten genügend Platz vorhanden, um weitere Meßelektroden zu installieren, woraus der Wunsch nach Integration resultiert.

So weist auch die bekannte pH-Einstabmeßkette den Nachteil auf, daß der Temperaturfühler in einem Schutzrohr (meist aus Glas) in der Kammer der Bezugselektrode untergebracht ist. Dadurch ergeben sich sehr lange Ansprechzeiten des Temperaturfühlers. In der DE-U-87 09 786 ist ein von einem Schutzrohr umgebener Temperaturfühler innerhalb der zentral angeordneten pH-Elektroden-Kammer untergebracht wobei der Temperaturfühler bis in den Raum unmittelbar hinter der Membran für die pH-Elektrode geführt ist. Dadurch wird zum einen der für den Puffer zur Verfügung stehende Platz verringert, was sich dann nachteilig auf die Pufferkapazität und die Lebensdauer der Meßkette auswirken kann, zum andern ist der Temperaturfühler über die membran für die pH-Elektrode sowie über das ihm umgebende Schutzrohr von der zu messenden Lösung getrennt, was lange Ansprechzeiten bedingt.

Vor diesem Hintergrund ist es die Aufgabe der Erfindung, einen Multifunktions-Sensor vorzuschlagen, der kurze Ansprechzeiten besitzt, einfach zu handhaben ist und mit dem möglichst viele Meßparameter parallel erfaßt werden können.

Diese Aufgabe wird gemäß der Erfindung durch einen Multifunktions-Sensor mit den Merkmalen des Anspruchs 1 gelöst. Demgemäß ist vorgesehen, daß alle weiteren Sensoren innerhalb des Elektrodenraums der pH-Meßelektrode angeordnet sind und durch die pH-Glasmembran der pH-Meßelektrode hindurchgeführt sind.

Der Multifunktions-Sensor weist überdies drei konzentrische Rohre auf, deren vordere Enden verschlossen und dadurch gegeneinander abgedichtet sind. Im inneren Rohr, sowie im Zwischenraum zwischen dem inneren und dem mittleren Rohr, sowie im Zwischenraum zwischen dem mittleren und dem äußeren Rohr - im folgenden werden diese drei Räume als Innenräume des Schafts bezeichnet - befindet sich jeweils mindestens ein Sensor. Der äußere Innenraum, also der Zwischenraum zwischen dem äußeren und dem mittleren Rohr, enthält die Bezugselektrode. Er weist auch das Diaphragma auf, das von der Meßlösung umspült wird.

Der Schaft, sowie die Rohre, bestehen vorzugsweise aus Glas, das chemisch unempfindlich gegen eine Vielzahl von Lösungen ist.

Erfindungsgemäß wird das vordere Ende des äußeren Rohres, das die pH-Glasmembran bildet, vom inneren Rohr, das sich nach außen aufweitet, durchbrochen. Das innere Rohr endet mit größerem Abstand zum vorderen Ende des Schafts als das mittlere Rohr. Dieses weitet sich an seinem vorderen Ende ebenfalls nach außen auf und ist dort dicht abschließend mit dem äußeren Rohr verbunden. Durch diesen Aufbau ergeben sich drei voneinander getrennte Innenräume im Schaft, in welchem die Sensoren örtlich dicht aneinander nahe dem vorderen Ende des Schafts angeordnet sind. Der Bereich des vom äußeren Rohr gebildeten Schafts zwischen den Verschmelzungen mit dem mittleren und dem inneren Rohr besteht aus H⁺-sensitivem Glas.

Bevorzugt umschließt oder beinhaltet der herausragende Teil des Endes vom inneren Rohr weitere Sensoren. Besonders bevorzugt umschließt der herausragende Teil des Innenrohrs den vorzugsweise in Wärmeleitpaste eingebetteten Temperatursensor. Zur Bestimmung von Redox-Potentialen oder Leitfähigkeiten können auf dem Außenumfang des herausragenden Teiles des Innenrohres aufgeschmolzene Platinringe dienen. Deren leitende Verbindungen werden durch die Wand des Innenrohres in dessen Innenraum und darin zum Anschlußteil am distalen Ende des Multifunktions-Sensors geführt. Dieser Aufbau ist deshalb vorteilhaft, da alle Sensoren räumlich sehr nahe beieinander liegen, nahezu den gleichen Meßpunkt haben und dadurch Meßfehler minimiert werden.

Bei einer bevorzugten Ausbildung beträgt der Durchmesser des Sensorenschafts 8 bis 16 mm, besonders bevorzugt 12 mm.

Eine vorteilhafte Ausgestaltung der Erfindung benutzt für den weiteren Sensor zur Temperaturbestimmung Platin 100 (0) oder einen NTC-Widerstand.

Ebenfalls bevorzugt im Sinne der Erfindung ist eine Ausgestaltung des weiteren Sensors aus Platin zur Bestimmung des Redox-Potentials oder aus zwei Platinelektroden zur Bestimmung der elektrolytischen Leitfähigkeit.

Bevorzugt ist der Schaft am distalen Ende mit einem Anschlußteil verschlossen, das die drei Innenräume des Schafts abdichtet. Zum Messen sind Anschlüsse am distalen Ende durch das Anschlußteil aus dem Schaft herausgeführt. Der Anschluß kann mittels eines Steckers oder mittels eines fest angeschlossenen Kabels erfolgen. Vorzugsweise wird ein Meßkabel mit einer Abschirmung verwandt.

Die Erfindung wird im folgenden anhand eines in der Zeichnung dargestellten Ausführungsbeispiels näher erläutert. Es zeigt:

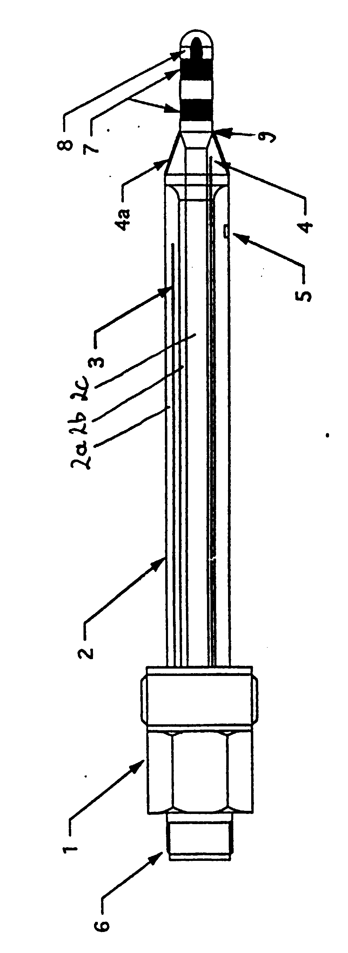

Figur 1 einen Längsschnitt durch einen erfindungsgemäßen Multifunktions-Sensor.

Der in der Figur dargestellte, erfindungsgemäße Multifunktions-Sensor weist einen hohlzylinderförmigen, im Verhältnis zu seinem Durchmesser relativ langen Glasschaft 2 auf.

Der Glasschaft 2 bildet ein äußeres Rohr 2a. Er umschließt zwei weitere, konzentrisch zu ihm angeordnete Glasrohre, nämlich ein mittleres Rohr 2b und ein inneres Rohr 2c. Das innere Rohr 2c durchbricht die pH-Glasmembran 4a des Schaftes 2 und ragt nach vom heraus. Die vorderen Enden des inneren Rohres 2c und mittleren Rohres 2b weiten sich trompetenförmig auf und schließen dichtend zum Glasschaft (2) ab. Auf diese Weise werden ein innerer, mittlerer und äußerer Innenraum festgeschrieben.

Im äußeren Innenraum befindet sich die Bezugselektrode (3) mit dem dazugehörigen Diaphragma (5) sowie eine Kaliumchloridlösung. Im mittleren Innenraum befindet sich die Arbeitselektrode (4) der pH-Meßelektrode sowie eine Pufferlösung. Die pH-Glasmembran (4a) schließt den äußeren Schaft (2) mit dem inneren Rohr 2c dichtend ab und besteht aus H⁺-sensitivem Glas. Der äußere Innenraum steht über ein für die Kaliumchloridlösung durchlässiges Diaphragma (5) des Glasschafts 2 in Kontakt mit der Meßlösung. Die im äußeren Innenraum (2a) angeordnete Elektrode (3) bildet somit eine Bezugselektrode.

Wie ersichtlich, sind am vorderen Ende des Multifunktions-Sensors zwei weitere Sensoren 7 vorwiegend in Form von zwei durchkontaktierten, aufgeschmolzenen Platinringen vorgesehen, die als Redox-Hilfs- oder Leitfähigkeitselektroden dienen können. Die Anschlüsse für diese weiteren Sensoren 7 sind durch das Innere des inneren Rohres 2c hin zu dem Anschlußteil 1 geführt, welches am rückwärtigen Ende des Multifünktions-Sensors vorgesehen ist und die Glasröhren schließt. Weiter vorne am proximalen Ende ist im übrigen ein Temperaturfühler 8 angeordnet, vorzugsweise in Wärmeleitpaste eingebettet, mittels dessen die Erfassung der Temperatur im Meßumgebungsbereich möglich ist.

Der erfindungsgemäße Multifunktions-Sensor zeichnet sich durch seine äußerste Kompaktheit sowie sehr kurzen Ansprechzeiten der Elektroden bzw. Sensoren aus, so daß er in der Tat für die Erfassung möglichst vieler Meßparameter zur selben Zeit herangezogen werden kann.

## Patentansprüche

1. Multifunktions-Sensor zur Messung von Parametern in flüssigen, wässrigen Proben, bestehend aus
einem Schaft (2) aus Glas, der ein äußeres Rohr (2a) aus Glas bildet,
einem mittleren Rohr (2b) und einem inneren Rohr (2c), jeweils ebenfalls aus Glas, die von dem äußeren Rohr (2a) konzentrisch umschlossen sind,
einer pH-Glasmembran (4a), die ein Ende des Schaftes (2) bzw. des äußeren Rohres (2a) dicht abschließt,
einer pH-Meßelektrode im Raum zwischen dem inneren Rohr (2c) und dem mittleren Rohr (2b),
einer Bezugselektrode im Raum zwischen dem mittleren Rohr (2b) und dem äußeren Rohr sowie
einem Temperaturfühler (8) in dem von dem Innenrohr (2c) umgebenen Raum,
dadurch gekennzeichnet,
daß das innere Rohr (2c) die Glasmembran (4a) zur Aufnahme mindestens eines weiteren Sensors (7) durchstößt, wobei die Anschlüsse des oder der weiteren Sensoren im Inneren des Innenrohres (2c) verlaufen.

2. Multifunktions-Sensor nach Anspruch 1, dadurch gekennzeichnet, daß das innere Rohr (2c) und die pH-Glasmembran miteinander verschmolzen sind.

3. Multifunktions-Sensor nach Anspruch 1 oder 2, dadurch gekennzeichnet, daß der Temperaturfühler aus Platin 100(0) oder aus einem NTC-Widerstand besteht.

4. Multifunktions-Sensor nach einem der Ansprüche 1 bis 3, dadurch gekennzeichnet, daß als weiterer Sensor eine Platinelektrode zum Messen des Redox-Potentials vorgesehen ist.

5. Multifunktions-Sensor nach einem der Ansprüche 1 bis 3, dadurch gekennzeichnet, daß als weiterer Sensor eine Vorrichtung zum Messen der Leitfähigkeit vorgesehen ist.

6. Multifunktions-Sensor nach einem der Ansprüche 1 bis 3, dadurch gekennzeichnet, daß als weiterer Sensor eine Sauerstoffelektrode vorgesehen ist.

7. Multifunktions-Sensor nach einem der Ansprüche 1 bis 3, dadurch gekennzeichnet, daß als weiterer Sensor eine ionensensitive Elektrode vorgesehen ist.

8. Multifunktions-Sensor nach einem der Ansprüche 1 bis 7, dadurch gekennzeichnet, daß der Schaft (2) einen Durchmesser im Bereich von 8-16 mm aufweist.

9. Multifunktions-Sensor nach Anspruch 8, dadurch gekennzeichnet, daß der Schaft (2) einen Durchmesser von 12 mm ausweist.

10. Multifunktions-Sensor nach einem der vorangehenden Ansprüche, dadurch gekennzeichnet, daß der Schaft (2) am distalen Ende mit einem Anschlußteil (1) verschlossen ist, das die drei Innenräume, die durch das äußere, das mittlere und das innere Rohr (2a, 2b, 2c) definiert sind, abdichtet.

## Claims

1. Multifunction sensor for measuring parameters in liquid, aqueous samples, comprising
a shaft (2) made of glass which forms an outer tube (2a) made of glass,
a middle tube (2b) and an inner tube (2c) which are likewise both made of glass and are concentrically surrounded by the outer tube (2a),
a pH glass membrane (4a) which closes one end of the shaft (2) or of the outer tube (2a) to form a seal,
a pH measurement electrode in the area between the inner tube (2c) and the middle tube (2b),
a reference electrode in the area between the middle tube (2b) and the outer tube, as well as
a temperature sensor (8) in the area surrounded by the inner tube (2c),
characterized in that
The inner tube (2c) passes through the glass membrane (4a) in order to accommodate at least one further sensor (7), the connections of the further sensor or sensors running in the interior of the inner tube (2c).

2. Multifunction sensor according to Claim 1, characterized in that the inner tube (2c) and the pH glass membrane are fused to one another.

3. Multifunction sensor according to Claim 1 or 2, characterized in that the temperature sensor is made of platinum 100(0) or is composed of an NTC thermistor.

4. Multifunction sensor according to one of Claims 1 to 3, characterized in that a platinum electrode for measuring the redox potential is provided as the further sensor.

5. Multifunction sensor according to one of Claims 1 to 3, characterized in that an apparatus for measuring the conductivity is provided as the further sensor.

6. Multifunction sensor according to one of Claims 1 to 3, characterized in that an oxygen electrode is provided as the further sensor.

7. Multifunction sensor according to one of Claims 1 to 3, characterized in that an ion-sensitive electrode is provided as the further sensor.

8. Multifunction sensor according to one of Claims 1 to 7, characterized in that the shaft (2) has a diameter in the range from 8 to 16 mm.

9. Multifunction sensor according to Claim 8, characterized in that the shaft (2) has a diameter of 12 mm.

10. Multifunction sensor according to one of the preceding claims, characterized in that, at the distal end, the shaft (2) is closed by a connecting part (1) which seals the three internal areas which are defined by the outer, the middle and the inner tube (2a, 2b, 2c).

## Revendications

1. Capteur multifonction pour la mesure de paramètres dans des échantillons liquides aqueux, consistant en
une tige (2) de verre, qui constitue un tube extérieur (2a) de verre,
un tube intermédiaire (2b) et un tube intérieur (2c), tous deux également de verre, qui sont entourés concentriquement par le tube extérieur (2a),
une membrane de verre à pH (4a), qui ferme de manière étanche une extrémité de la tige (2) ou du tube extérieur (2a),
une électrode de mesure du pH dans l'espace entre le tube intérieur (2c) et le tube intermédiaire (2b),
une électrode de référence dans l'espace entre le tube intermédiaire (2b) et le tube extérieur, ainsi que
un capteur de température dans l'espace entouré par le tube intérieur (2c),
caractérisé en ce que
le tube intérieur (2c) traverse la membrane de verre (4a) pour recevoir au moins un autre capteur (7), les connexions du ou des autres capteurs s'étendant à l'intérieur du tube intérieur (2c).

2. Capteur multifonction selon la revendication 1, caractérisé en ce que le tube intérieur (2c) et la membrane de verre à pH sont fondues ensemble.

3. Capteur multifonction selon la revendication 1 ou 2, caractérisé en ce que le capteur de température consiste en platine 100(0) ou en une résistance NTC.

4. Capteur multifonction selon l'une des revendications 1 à 3, caractérisé en ce qu'une électrode de platine pour la mesure du potentiel redox est prévue en tant qu'autre capteur.

5. Capteur multifonction selon l'une des revendications 1 à 3, caractérisé en ce qu'un dispositif de mesure de la conductivité est prévu en tant qu'autre capteur.

6. Capteur multifonction selon l'une des revendications 1 à 3, caractérisé en ce qu'une électrode à oxygène est prévue en tant qu'autre capteur.

7. Capteur multifonction selon l'une des revendications 1 à 3, caractérisé en ce qu'une électrode sensible aux ions est prévue en tant qu'autre capteur.

8. Capteur multifonction selon l'une des revendications 1 à 7, caractérisé en ce que la tige (2) présente un diamètre situé dans une plage de 8 à 16 mm.

9. Capteur multifonction selon la revendication 8, caractérisé en ce que la tige (2) présente un diamètre de 12 mm.

10. Capteur multifonction selon l'une des revendications précédentes, caractérisé en ce que la tige (2) est fermée à son extrémité distale, au moyen d'une pièce de fermeture (1), qui obture les trois espaces qui sont définis par les tubes extérieur, intermédiaire et intérieur (2a, 2b, 2c).
